# EUROPEAN PATENT APPLICATION

(11) **EP 4 844 240 A1**
(43) Date of publication of application: **25.11.2026**
(21) Application number: 26179519.9
(22) Date of filing: 19.05.2026
(51) Int. Cl.: F16C 33/66, F16C 33/40, F16C 33/48

(54) **BEARING AND WIND TURBINE**

(30) Priority: 21.05.2025 ES 202530422
(71) Applicant: Nordex Energy SE & Co. KG, 22419 Hamburg (DE); Nordex Energy Spain, S.A.U., 31395 Barasoain (Navarra) (ES)
(72) Inventor: Albertsen, Björn, 22419 Hamburg (DE); Dreher, Moritz, 22419 Hamburg (DE); Ciervide, Jon, 31395 Barasoain (ES); Pascual Resano, Javier, 31395 Barasoain (ES); Villain, Dominik, 22419 Hamburg (DE); Nitschke, Thomas, 22419 Hamburg (DE)
(74) Representative: Epping - Hermann - Fischer

(57) **Abstract**

A bearing (200) for a wind turbine (100) comprises
- an inner bearing ring (201),
- an outer bearing ring (202), wherein the inner bearing ring (201) and the outer bearing ring (202) are arranged concentrically to each other and are configured for a relative rotation therebetween about an axis (204),
- a plurality of rolling elements (203) arranged in a raceway (210) defined in each of the inner bearing ring (201) and the outer bearing ring (202), each of the rolling elements (203) having a rolling contact in between the inner bearing ring (201) and the outer bearing ring (202),
- a cage (250) annularly arranged between the inner bearing ring (201) and the outer bearing ring (202) and is configured for holding the rolling elements (203), the cage (250) comprising a plurality of openings (251), each opening (251) configured to support one rolling element (203) of the plurality of rolling elements (203), and
- an aperture (252) for distribution of a lubricant (300) through a bearing volume (205), in particular through the raceway (210).

## Description

The disclosure relates to a bearing for a wind turbine, in particular a pitch bearing and/or a yaw bearing for the wind turbine. The disclosure further relates to a wind turbine, in particular a wind turbine with a bearing as disclosed herein.

A wind turbine may include a rotor that includes a rotatable rotor assembly having multiple rotor blades. The rotor blades transform wind energy into a drive torque that drives the generator of the wind turbine via a drive train.

It is desirable to provide a bearing for a wind turbine that enables a reliable operation. It is further desirable to provide wind turbine that enables a reliable operation.

Embodiments of the disclosure provide a bearing for a wind turbine. Embodiments of the disclosure provide a wind turbine.

According to an embodiment, the bearing comprises an inner bearing ring. The bearing comprises an outer bearing ring. The inner bearing ring and the outer bearing ring are arranged concentrically to each other. The inner bearing ring and the outer bearing ring are configured for a relative rotation therebetween about an axis.

The bearing comprises a plurality of rolling elements. The rolling elements are arranged in a raceway. The raceway is defined in each of the inner bearing ring and the outer bearing ring. Each of the rolling elements has a rolling contact in between the inner bearing ring and the outer bearing ring, in particular a rolling contact with the raceway.

The raceway part of the inner bearing ring may be referred to as inner raceway. The raceway part of the outer bearing ring may be referred to as outer raceway.

Taking an example of the spherical rolling element, each raceway of the inner bearing ring and the outer bearing ring comprises a semi-spherical, partly semi-spherical or substantially semi-spherical shape or cross-section that conforms with the spherical geometry of the spherical rolling element.

The bearing comprises a cage. The cage is annularly arranged between the inner bearing ring and the outer bearing ring. The cage is configured for holding the rolling elements. For example, the cage comprises a ring shape in conformity with the shape of the bearing rings.

The cage comprises a plurality of openings. Each opening is configured to support one rolling element of the plurality of rolling elements. For example, a plurality of openings may be provided in a repeating manner to support a plurality of rolling elements.

The bearing comprises an aperture for distribution of a lubricant through a bearing volume, in particular through the raceway.

An aperture, for example, may be a through hole, a notch, a gap, a crevice, an orifice, a passage, a slit formed in the inner bearing ring and/or the outer bearing ring and/or the cage that allows distribution or passage of the lubricant with predefined flow characteristics into the bearing volume. The flow characteristics may be, for example, velocity, flow rate, pressure, and so on.

According to an aspect, an aperture may be formed or defined along the radial direction or a substantial radial direction of the bearing relative to the axis of the bearing. For example, the aperture may be formed or defined as a hole through the thickness of the cage, such that the hole serves as a fluidic passage between the raceway of the inner ring and the raceway of the outer ring for distribution of the lubricant.

According to one aspect, the aperture may influence or alter the flow characteristics of the lubricant as the lubricant passes through the aperture.

For example, the aperture may be such that the flow velocity, flow rate, or flow pressure, among other characteristics of the lubricant, may be optimized for improved distribution (or reach) of the lubricant.

According to an aspect, the shape and dimensions of the aperture are determined and defined based on desired lubrication at a specific localized zone in the bearing. For example, a region of the bearing or the bearing volume that is susceptible to starvation or deprivation of the lubricant, or prone to an insufficient inflow of the lubricant may be provided with an aperture or a plurality of apertures that optimize the flow or the flow characteristics into said region.

The bearing volume may include but is not limited to an interior (free) space, a void, a gap, a clearance, or a cavity inside the bearing into which the lubricant can enter, seep, flow or be discharged. Filling the bearing volume with lubricant is essential to ensure smooth operation of the bearing by minimizing friction, as well as the impacts arising out of metal-to-metal contacts, and dissipation of generated heat.

According to some embodiments, the bearing volume is the free space or a void between the bearing races or the bearing rings which allows the lubricant to pass through, to flow, or to be carried, so that the bearing, in particular contact regions, for example metal contact regions, are smeared with the lubricant. For example, the lubricant entering the raceway is smeared over the rolling elements as well as the raceways by virtue of relative rotation between the inner bearing ring and the outer bearing ring. Therefore, friction is reduced during the movement of the bearing, in particular during the movement of the elements of the bearing relative to each other. For example, the lubricant is grease or comprises grease.

According to an example, distribution of lubricant through the bearing volume includes circulation of the lubricant along the circumference of each of the raceways accompanied by channeling the flow of the lubricant between the raceways across the cage through the aperture. Thus, the flow of the lubricant may be realized in the circumferential, radial or axial directions of the bearing.

The flow of the lubricant through the aperture into the bearing volume according to some embodiments of the disclosure is characterized by a radial flow, or substantially radial flow, or can be represented with reference to the radial direction of the bearing.

According to another example, the flow of the lubricant through the aperture into the bearing volume according to an exemplary embodiment of the disclosure is characterized by a circumferential flow, or substantially circumferential flow, or can be represented with reference to the circumferential direction of the bearing.

According to an embodiment, flow of the lubricant through the aperture into the bearing volume is a mixed flow comprising combination of a radial flow and an axial flow.

Axial flow is a flow along an axis of the bearing or referenced along an axis of the bearing. The radial flow is perpendicular to the axial flow and is directed towards the center in the radial direction.

In other embodiments, the flow of the lubricant through the aperture into the bearing volume is a mixed flow comprising a combination of a radial flow and a circumferential flow.

In other embodiments, the flow of the lubricant through the aperture into the bearing volume is a mixed flow comprising a combination of a radial flow, a circumferential flow, and an axial flow.

In other embodiments, the flow of the lubricant through the aperture into the bearing volume is a mixed flow comprising a combination of a radial flow and a tangential flow, the tangential flow being perpendicular to the radial flow at a common point on the circumference.

According to some embodiments, the inner bearing ring, or the outer bearing ring, or both, comprise one aperture at the raceway region.

According to some embodiments, the inner bearing ring, or the outer bearing ring, or both comprises a plurality of apertures, in particular two or more apertures. For example, the inner bearing ring, or the outer bearing ring, or both comprise as many apertures as openings, or twice as many or half as many. Other numbers of apertures are also possible.

According to some embodiments, the cage comprises one aperture. According to some embodiments, the cage comprises a plurality of apertures, in particular two or more apertures. For example, the cage comprises as many apertures as openings, or twice as many or half as many. Other numbers of apertures are also possible.

The plurality of apertures may be distributed along the circumference of the bearing in a regular or random manner.

According to some embodiments, the bearing is a pitch bearing for the wind turbine. According to some embodiments, the bearing is a yaw bearing for the wind turbine. Other types of bearings are possible, too.

The distribution of lubricant is beneficially enabled due to the aperture. The reliable distribution of lubricant ensures a proper and durable operation of the bearing. As disclosed herein, it has been identified that besides the lubricant amount, the characteristics associated with the distribution of the lubricant inside the bearing impacts the quality of the lubrication and life of the contact elements. In particular for a multi-raceway bearing, which comprises two or more raceways, the aperture is beneficial to avoid an unequal lubrication and/or an undesired pressure difference of the lubricant between the raceways.

For example, the aperture is configured for channeling the lubricant flow between the two raceways of a bearing ring.

For example, the aperture is configured to channelize or route or direct the flow of the lubricant in the radial direction of the bearing from the raceway of the inner bearing ring to the raceway of the outer bearing ring, or vice versa.

In another example, the flow of the lubricant between the raceways or the rows may be resolved or represented with reference to the radial direction of the bearing.

Benefits of providing the aperture such as sufficient lubrication of the bearing, an easier removal of waste lubricant, and/or avoidance of external leakages of lubricant through sealings can be realized.

The aperture is beneficial for a proper lubricant distribution and maintaining pressure in the bearing volume, for example between the raceways i.e., between the inner and outer raceways. The aperture enables a channel for the lubricant towards the adjacent raceway. Alternatively, or in addition, the aperture enables a reliable lubricant flow between the inner and outer raceways. Overall lubricant distribution can be reliably provided.

For example, the aperture helps to provide a homogeneous lubricant distribution inside the bearing volume. For example, the aperture helps to provide comfortable maintenance of the bearing. For example, the aperture helps to reduce the fresh lubricant consumption.

For example, the aperture in the cage helps to reduce the lubricant flow obstruction, e.g., through the cage or an unintended build-up of pressure in certain localized regions.

According to some embodiments, the cage comprises at least one of a planar portion and a curvilinear portion extending at least partly across the raceway relative to a first direction. For example, the first direction extends parallel or substantially parallel to the axis of the bearing. For example, the cage extends at least partly along the first direction parallel to the axis in a planar manner. Alternatively, or in addition, the cage extends at least partly inclined relative to the first direction and/or the axis. Alternatively, or in addition, the cage extends at least partly arcuately relative to the first direction and/or the axis.

The cage is configured to be arranged at a first region and at a second region of the bearing rings.

According to an aspect, the term 'arranged' refers to a configuration where the cage is supported, e.g., coupled, at the first region and the second region so that the cage extends in the first direction across the raceway. The first region and the second region may correspond to the inner bearing, outer bearing or both.

According to another aspect, the cage itself comprises or defines a first region and a second region with the cage extending along the axis of the bearing between the first region and the second region across the raceway.

In yet another aspect, the cage is arranged such that the extremities of the cage determined along the first direction (or along the axis of the bearing) lie proximal or adjacent to the first region and the second region by virtue of arrangement of the cage across the raceway and annularly between the inner bearing ring and the outer bearing ring.

For example, the cage is supported at the first region and at the second region in an overspan manner across the raceway, such that the cage bridges the first region with the second region. For example, the first region and the second region are at a distance to each other along the first direction. For example, the first region and the second region are arranged opposite to each other along the first direction. The first region and the second region can also be referred to as shoulders of the cage that extend along the circumference of the bearing rings and defining the extremities of the raceways in the first direction.

According to some embodiments, the aperture is formed in the inner bearing ring or the outer bearing ring or both adjacent to the respective raceways. For example, the aperture may be in the form of a through hole or a groove or a slot machined at an extremity of the raceway, e.g., at the first region or the second region present adjacent to the raceway. Such an aperture, e.g., a through hole, or a groove or a slot forms a passage leading to the bearing volume i.e., the raceway, so that the lubricant can be channelized or directed into the raceway. According to an example, the aperture, e.g., a through hole, a groove or a slot may be substantially parallel or inclined to the radial direction of the bearing. In such a configuration, if the cage conceals the raceway between the first region and the second region, the aperture e.g., the through hole, the groove or the slot allows distribution of the lubricant into the corresponding raceway, as well as between two raceways. In other words, the aperture e.g., the through hole, the groove or the slot forms a gap with the cage which allows distribution of the lubricant through the bearing volume.

According to some embodiments, the first region and/or the second region of the bearing rings comprises an edge defined with a plurality of apertures in the form of crests and troughs. One trough or one crest is configured to define the aperture. For example, the aperture is arranged or formed between two adjacent crests. For example, a trough or a crest forms a gap with respect to the cage, and this gap serves as a passage for allowing flow of lubricant towards and into the raceway.

According to some embodiments, the aperture may be, for example, a recess or a cut-out or a notch or a slot provided or formed in the cage which is arranged annularly between the bearing rings. When the cage is annularly arranged, the aperture according to any of these examples forms a gap or an opening with the bearing, specifically with the first region and/or the second region of the bearing ring present adjacent to the raceway. Therefore, the aperture is bound by the cage as well as at least partly bound by the first region and/or the second region.

According to an example, if the aperture has an open profile e.g., U-shape or V-shape at an edge of the cage adjacent to the first region and/or the second region, then one or both of the first region and the second region may overlap or align with the open side or open end of said U-shaped or V-shaped profile to form a closed profiled aperture that allows distribution of the lubricant.

According to some embodiments, the cage comprises at least one edge portion defined with a plurality of crests and troughs. One trough of the plurality of troughs is configured to define the aperture. For example, the aperture is arranged or formed between two adjacent crests. For example, two adjacent crests limit the aperture at two sides, while the corresponding trough limits the aperture at the third side. For example, the trough forms a gap with respect to the first and/or second region and the gap serves as an aperture for allowing flow of lubricant towards the raceway. For example, the edge portion overspans the first and/or second region in the first direction.

According to some embodiments, one crest of the plurality of crests in the cage has a circumferential extent equal to or greater than a cross-sectional dimension of one rolling element, in particular a radius of the rolling element or a diameter of the rolling element. Alternatively, or in addition, one trough of the plurality of troughs in the cage has a circumferential extent lesser than or equal to a cross-sectional dimension of one rolling element, in particular a radius of the rolling element or a diameter of the rolling element. For example, this is useful to avoid over-lubrication and for reliably controlling the quantity of flow. For example, the circumferential extent of the troughs is preset to enable a reliable lubricant flow and a throttling effect.

The circumferential extent is a dimension considered or measured along the circumference of the cage or substantially along the circumference of the cage.

According to some embodiments, the aperture is formed between two directly adjacent openings of the plurality of openings considered along the circumference of the cage. The aperture may be located at different regions of the cage.

According to some embodiments, a plurality of apertures is formed in a non-repeating manner along a circumference of the cage, i.e., spacing between two adjacent apertures along the circumference is non-uniform or the apertures are non-uniformly or randomly defined along the circumference of the cage. For example, if a first aperture is provided at 3 o'clock position of the bearing, a second aperture adjacent to the first aperture considered along clockwise direction may be provided at 5 o'clock position of the bearing, and a third aperture also considered along the clockwise direction may be provided at 10 o'clock position, leading to unequal intervals.

According to an example, the apertures may be arranged in various repeating or non-repeating patterns.

According to some embodiments, one or more apertures comprise a periphery of a predefined geometry. For example, if the aperture formed in the cage has a rectangular shape, and the first region of the bearing ring overlaps or over-extends the aperture, then the aperture may effectively have a reduced rectangular periphery or a square periphery (due to the overlap or overextension) through which the lubricant distribution in the bearing volume may be attained.

At least a portion of the periphery comprises a guiding portion configured for channeling flow of the lubricant towards the raceway. For example, the guiding portion may be perpendicular to the planar portion of the cage but extending, e.g., ramping or sloping towards the raceway. The guiding porting for example comprises at least one of a ramp, a vane, and an inclining portion to enhance or assist the flow of lubricant to a predefined area inside the raceway. For example, the orientation of the guiding portion may influence the flow of the lubricant to a predefined region, for example, to the center of the raceway, for example to prevent lubricant starvation.

According to some embodiments, the apertures of the plurality of apertures have two or more different shapes. According to some embodiments, all apertures have the same shape. According to some embodiments, the shape is at least one of a triangular shape, a rectangular shape, a trapezoidal shape, a polygonal shape, a round shape, an oval shape, and combinations thereof. Other shapes are also possible.

According to another embodiment, in case of the plurality of crests and troughs defined in the cage or the bearing ring is defining a pattern, the pattern may resemble a square wave, rectangular wave, sine wave, trapezoidal wave, triangular wave, saw-tooth wave and so on.

According to some embodiments, the cage comprises a first cage segment and a second cage segment. More than two cage segments are also possible. For example, the cage segments together form a ring that extends over 360°. For example, the segments are configured to be connected in the circumferential direction end to end. One aperture in the first cage segment comprises a shape and/or a dimension that is different than a shape and/or a dimension of another aperture of the first cage segment and/or the second cage segment. For example, the shape and/or the dimension of the aperture of one of the segments is different to the shape and/or the dimension of the aperture of another one of the segments. For example, the shape and/or the dimension of the apertures are the same in all segments.

According to some embodiments, the aperture extends at least by 0.5 mm along the first direction.

According to an embodiment, the wind turbine comprises a bearing according to any one of the embodiments described herein.

The wind turbine comprises a first wind turbine component, for example a rotor blade or a nacelle. The wind turbine comprises a second wind turbine component, for example a rotor hub or a tower of the wind turbine. The bearing connects the first wind turbine component and the second wind turbine component for a relative rotation between the first wind turbine component and the second wind turbine component.

The cage with the aperture is useful for a desired lubrication of the bearing of the wind turbine, particularly the bearing volume, such that the wind turbine is operable reliably.

Advantages, features and further developments of the bearing may also apply to the wind turbine and vice versa.

Embodiments of the present invention will be further described with reference to the accompanying drawings. In the drawings, elements of the same structure and/or functionality may be referred to by the same reference signs. Embodiments shown in the figures are illustrative representations and are not necessarily drawn to scale.
Figure 1 is a schematic view of a wind turbine according to an embodiment.
Figure 2 is a schematic view of a bearing connecting a first component and a second component according to an embodiment.
Figure 3 is a schematic sectional view of an exemplary bearing according to an embodiment.
Figure 4 is a schematic view of a part of an exemplary bearing depicting the cage comprising the openings and the aperture according to some embodiments.
Figure 5 is a schematic sectional view of a portion of an exemplary bearing depicting the distribution of the lubricant through the bearing volume according to an embodiment.
Figure 6 is a schematic sectional view of a cage according to an embodiment.

While the invention is amenable to various modifications and alternative forms, specifics thereof have been shown by way of examples in the drawings and will be described in detail. **It** should be understood, however, that the intention is not to limit the invention to the particular embodiments described. On the contrary, the intention is to cover all modifications, equivalents and alternatives falling within the scope of the invention as defined by the appended claims.

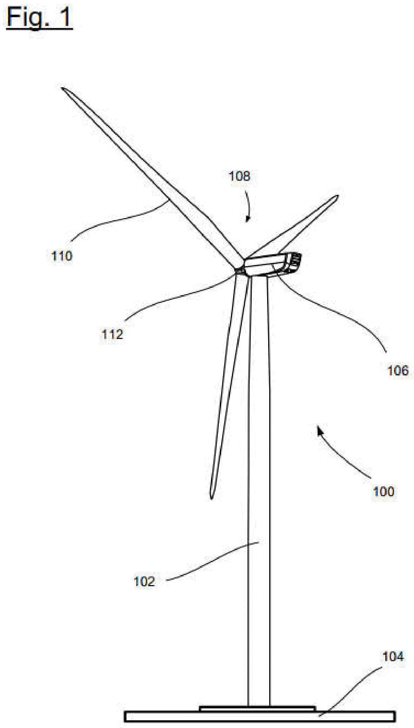

As shown in Figure 1, a wind turbine 100 comprises a tower 102. The tower 102 is connected to a foundation 104 fixed to the ground. Specifically, the foundation 104 may be formed at a predetermined depth inside the ground, which is reinforced by a composite structure, for example a concrete support. A nacelle 106 is arranged on a top of the tower 102 opposite the foundation 104. The nacelle 106 houses the drive train among other components and subassemblies. Inside the nacelle 106, for example, a generator is arranged that is connected to a rotor 108 via the drive train. The drive train may comprise, for example, a gearbox and a rotor shaft. The rotor 108 comprises several rotor blades 110. The rotor blades are mounted on a rotor hub 112. The rotor hub 112 is connected to the rotor shaft.

For example, the rotor 108 is driven by an airflow interaction of moving wind with the rotor blades 110 of the rotor 108. The rotational movement of the rotor 108 is transmitted via the drive train to the generator. The generator converts the mechanical output of the rotor 108 into electrical energy.

By rotating the rotor blades 110 relative to the hub 112, the load on the rotor may be controllable. The rotor blades 110 are configured to be pitched in and out of the wind in order to modulate the energy capture as wind decreases or increases. The rotor blades 110 are pitchable to adjust the output or to protect the wind turbine from damaging overloads.

To perform the pitch control, each rotor blade 110 is provided with a bearing 200 as shown in the following figures. The slewing bearing 200 may also be referred to as a pitch bearing in the context of pitch system, or a yaw bearing in the context of yaw bearing of the wind turbine.

According to further embodiments, the bearing 200 is another bearing of the wind turbine 100, for example a yaw bearing for attaining a relative rotation between the tower 102 and the nacelle 106.

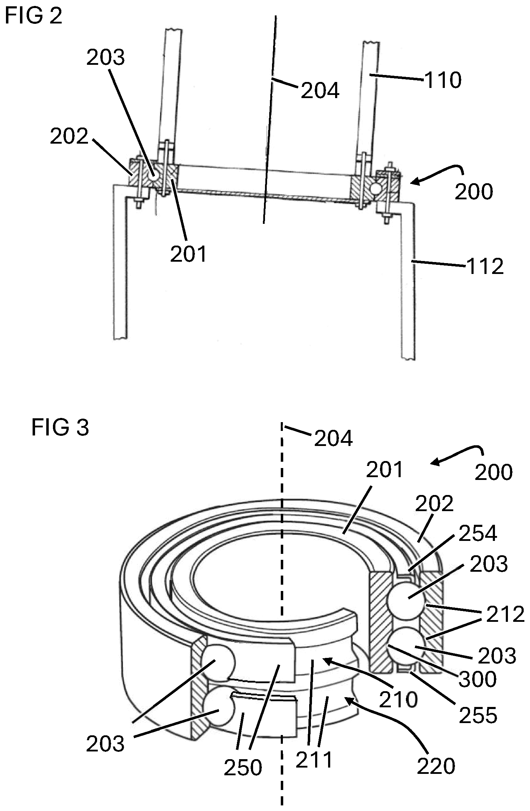

Figure 2 schematically shows an exemplary bearing 200 in the configuration of a pitch bearing which serves as a rotary connection.

The bearing 200 is located generally between the rotor hub 112 and the respective rotor blade 110. A mechanism with a pitch drive (not explicitly shown), for example a hydraulic cylinder or an electric motor, provides the necessary energy and force for pitching the respective rotor blade 110 relative to the hub 112.

The bearing 200 is arranged between the rotor blade 110 and the hub 112 for enabling the relative rotation. The bearing 200 comprises an inner bearing ring 201 that is attached to the rotor blade 110. The bearing 200 comprises an outer bearing ring 202 that is attached to the rotor hub 112. However, the connection may be reversed, i.e., the inner bearing ring 201 may be attached to the hub 112 and the outer bearing ring 202 may be attached to the blade 110.

Rolling elements 203 are arranged between the inner bearing ring 201 and the outer bearing ring 202 for the relative rotational movement between the inner bearing ring 201 and the outer bearing ring 202 around an axis 204. The rolling elements 203 may comprise the shape of a ball, a tapered cone, a cylinder, or another shape.

Figure 3 is a perspective cut-sectional view also showing the inside of the bearing 200.

The inner bearing ring 201 and the outer bearing ring 202 together provide and/or define a raceway 210 for accommodating the rolling elements 203. The inner bearing ring 201 comprises a raceway inner part 211 of the raceway 210. The outer bearing ring 202 comprises a raceway outer part 212 of the raceway 210. The inner part 211 and the outer part 212 may conform with each other in terms of shape, dimensions, etc., so that the rolling elements are aptly supported for allowing relative rotational motion between the bearings rings while establishing rolling contacts at different points. The raceway inner part 211 and the raceway outer part 212 may be formed each as a notch or a groove or a cut-out in the respective bearing ring 201, 202. For sake of simplicity, the raceway 210 corresponding to the inner bearing ring 201 is referred to as an inner raceway, and the raceway 210 corresponding to the outer bearing ring 202 is referred to as an outer raceway.

A lubricant 300, for example a grease and/or an oil, is provided in, e.g., supplied into the raceway 210 and at the rolling element 203 to reduce friction during the relative movement.

A seal may be provided between the inner bearing ring 201 and the outer bearing ring 202 to seal the bearing 200 to the outside.

A cage 250 is arranged between the inner bearing ring 201 and the outer bearing ring 202. The cage 250 is arranged to hold the rolling elements 203. For example, a distance between the rolling elements 203 is maintained by the cage 250. The cage 250 may be in any of the known forms.

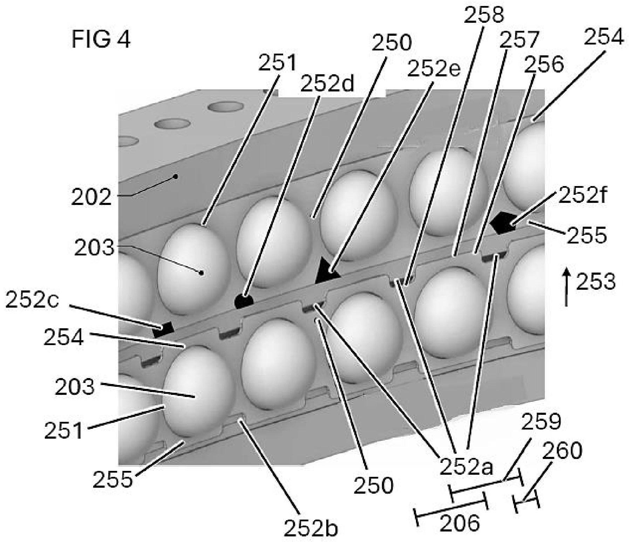

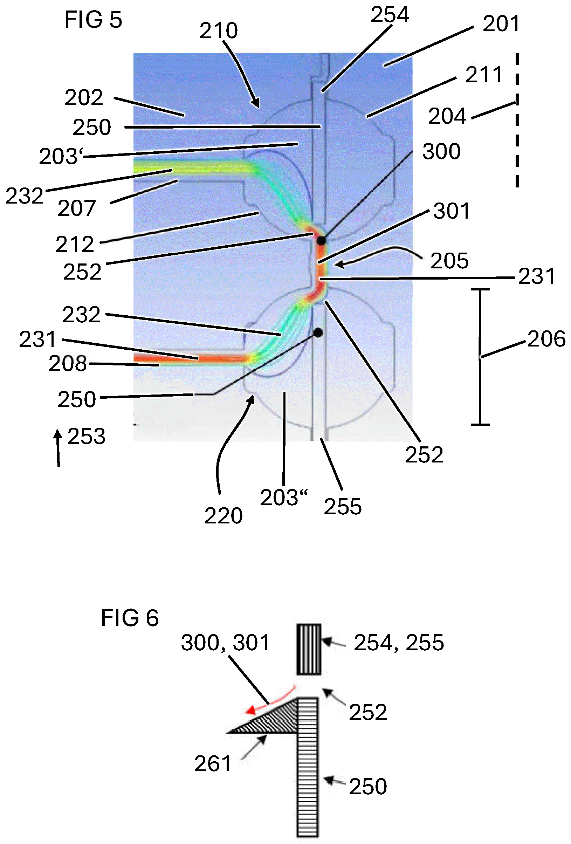

As shown in Figures 4 and 5, the cage 250 comprises a plurality of openings 251 for holding the rolling elements 203. One rolling element 203 is arranged in each opening 251 of the cage 250. For example, in case of spherical rolling elements the cage 250 may be such that each opening 251 has a spherical shape conforming to the shape of the spherical rolling element. In case of cylindrical or tapered rolling elements, the openings 251 are rectangular and trapezoidal, respectively.

As also shown in Figures 4 and 5, the bearing 200 may comprise two or more raceways 210, 220 with respective rolling elements 203 located in these raceways 210, 220 and held by the respective cages 250. The cages 250 of the individual raceways 210, 220 of the bearing 200 are designed, constructed, and arranged identically according to embodiments. According to other embodiments, the cages 250 of the individual raceways 210, 220 of the bearing 200 are designed, constructed, and arranged differently to one another, as shown in Figure 4 as an example.

The illustration of the cages 250 in Figure 4 is to be understood merely schematically and as an example in order to show apertures 252 of various configurations provided in the cages 250, which are explained in more detail below, along with the various possibilities for their configurations, while similar or different apertures 252 may also be provided in the bearing rings 201, 202 in addition to the cage 250, or independently of the cage 250.

The following mainly describes one cage 250 and the explanations also apply to other cages 250 or other configurations of the cage that may be provided in the bearing 200.

According to some embodiments, the cage 250 is provided as a single piece. According to some embodiments not explicitly shown, the cage 250 is provided with a plurality of segments that together form the ring shape extending over 360° of the bearing. For example, the cage 250 is formed of two segments, three segments, four segments or more. The segments constituting the cage 250 may be connected by any of the known means and techniques.

The cage 250 comprises one aperture 252 or a plurality of apertures 252. The aperture 252, for example, in the form of a recess in the cage 250 is configured to allow, effectuate, and/or increase the flow of the lubricant 300 through the cage 250 into the bearing volume, for example, into the void defined by the raceways.

The cage 250 extends along a first direction 253 between a first region 254 and a second region 255. According to one aspect, the raceways of the bearing rings are edged or bordered by the first region 254 and the second region 255 such that the first region 254 and the second region 255 are arranged on either side (opposite sides) of the raceway 210. In such a case. the raceway 210 is arranged or lies between the first region 254 and the second region 255. In other words, if the first and the second regions 254, 255 constitute the elevation, then the raceway 210 constitutes the depression, with the cage 250 bridging the first and second regions across the raceway. The regions 254, 255 are arranged between the bearing rings 201, 202 to keep the cage 250 radially in place.

The arrangement is such that the aperture 252 is proximal or adjacent to the first region 254 and/or the second region 255. For example, the aperture 252 extends from an edge portion 256 of the cage 250 inwards along the first direction 253. For example, the raceway 210 is radially accessible through the aperture 252, in particular for a lubricant flow 301 (Figure 5) through the aperture 252. The cage 250 extends along the first direction 253 between two edge portions 256. A plurality of crests 257 and troughs 258 may be formed at the edge portion 256 to form the aperture 252 that is also bound by the first region 254 and/or the second region 255.

In another example, the aperture 252 extends from an edge portion 256 of the cage 250 inwards along the first direction 253, as well as along the circumferential direction. The raceway 210 is radially as well as circumferentially accessible through the aperture 252, in particular for a lubricant flow 301 (Figure 5) through the aperture 252.

As shown in figure 4, the rolling element 203 comprises a cross-sectional dimension 206. The crest 257 comprises a circumferential extent 259. The circumferential extent 259 of the crest 257 is for example equal to or greater than the cross-sectional dimension 206 of the rolling element 203. The circumferential extent 259 of the crest 257 is for example equal to or greater than a radius 206 of the rolling element 203, which being a spherical rolling element.

The trough 258 comprises a circumferential extent 260. The circumferential extent 260 of the trough 258 is for example lesser than or equal to the cross-sectional dimension 206 of the rolling element 203. The circumferential extent 260 of the trough 258 is for example lesser than or equal to the radius 206 of the rolling element 203, which being a spherical rolling element.

The circumferential extent 259 of the crest 257 and circumferential extent 260 of the trough 258 are specified such that the cage 250 provides both stability for the rolling elements 203 and ensures sufficient lubricant flow 301 through the aperture 252.

The aperture 252 extends along the first direction 253 at least by 0.5 mm, for example in range of between 0.5 mm and 20 mm, for example between 1 mm and 10 mm, for example between 3mm and 6mm, for example about 5 mm.

The aperture 252 extends along the first direction 253 for example in a range of between 10% to 40% of the cross-sectional dimension 206 of the rolling element 203, for example in a range of 10% to 20% of the cross-sectional dimension 206.

For example, the opening 251 and the aperture 252 are always arranged alternately along the circumference of the cage 250. Other patterns are also possible, for example one aperture 252 for every two or more openings 251. The arrangement can be regular or irregular. It is possible that the aperture 252 or a plurality of apertures 252 is provided on each edge portion 256. It is also possible that the aperture 252 or the plurality of apertures 252 is only provided on one of the two edge portions 256. For example, the apertures 252a at one of the edge portions 256 are identically formed as the apertures 252b at the other one of the edge portions 256. For example, the apertures 252a at one of the edge portions 256 are formed different to the apertures 252b at the other one of the edge portions 256. It is also possible that some of the apertures 252a are formed identical to some of the apertures 252b and some of the apertures 252a are formed differently compared to some of the apertures 252b.

The aperture 252 may comprise different shapes. For example, the aperture 252 comprises a rectangular shape, as marked in Figure 4 with the reference signs 252a, 252b and 252c. Transitions between horizontal and vertical sections of the edge portion 256 can be angular as shown for aperture 252c or rounded as shown for apertures 252a, 252b. For example, the aperture 252 comprises a round shape, for example circular, semicircular, circular segment, oval, or oval segment, as marked in Figure 4 with the reference sign 252d. For example, the aperture 252 comprises a triangle shape, as marked in Figure 4 with the reference sign 252e. For example, the aperture 252 comprises a polygon shape, for example pentagon, hexagon, heptagon or octagon, as marked in Figure 4 with the reference sign 252f. Other shapes and combinations of different shapes are possible.

It is possible that the aperture 252 or a plurality of apertures 252 is provided on one or both of the first region 254 and the second region 255 of the bearing ring, while the edge portion 256 of the cage 250 does not comprise any aperture 252.

Figure 5 is a schematic sectional view of a portion of an exemplary bearing that shows a first lubricant line 207 and a second lubricant line 208. According to one example, the rolling elements 203' and 203" may belong to two different races or rows of the bearing, e.g., to two different rows of a two-row spherical rolling element type bearing. In this example, the bearing volume 205 may include any passage, channel, void, etc., that may fluidly connect one raceway with the other raceway via the apertures 252. The first lubricant line 207 and the second lubricant line 208 are formed, for example, in the outer bearing ring 202. The first lubricant line 207 is in fluid communication with the first raceway 210. The second lubricant line 208 is in fluid communication with the second raceway 220. The lubricant 300 can be directed to the first raceway 210 as well as the vicinity of the rolling element in the first raceway 210, say the first rolling element 203', from the second lubricant line 208. The aperture 252 enables the sufficient lubricant flow 301 between the two raceways 210, 220 via the bearing volume 205, such that the sufficient lubricant flow 301 between the first lubricant line 207 and the second lubricant line 208 is possible.

For example, the aperture 252 corresponding to the second raceway 220 and in fluid communication with the second lubricant line 208 (say inlet line) facilitates channeling of the lubricant flow 301 towards the aperture 252 corresponding to the first raceway 210 through the bearing volume 205, and thereafter, towards the first lubricant line 207 from where the lubricant 300 may exit. The flow in this case may be, for example, axial, i.e., along the axis of the bearing, or mixed flow, i.e., combined axial and radial flow. Undesirable pressure differences or pressure build-up in any localized region can therefore be avoided or at least reduced.

According to an embodiment, the lubricant 300 that is introduced through the second lubricant line 208 may be accompanied by changes in flow characteristics, e.g., flow velocity. For instance, the lubricant 300 supplied via second lubricant line 208 can enter into the raceway 220 with a desired velocity 231 that may be increased as the lubricant passes from the aperture 252 corresponding to the second raceway 220 towards the aperture 252 corresponding to the first raceway 210. In other words, an increased flow velocity 231 may be attained as the lubricant flow 301 gets channelized from the aperture 252 of the second raceway 220 towards the aperture 252 of the first raceway 210 in the bearing volume 205, compared to a cage without the aperture. For example, the lubricant 300 comprises a higher velocity 231 in the second lubricant line 208 and between the aperture 252 of the second raceway 220 towards the aperture 252 of the first raceway 210 compared to a lower velocity 232 at the rolling element 203', 203" and in the first lubricant line 207.

According to another example, the rolling elements 203' and 203" may be two different rolling elements of the same row of the bearing. In this case, the flow may be, for example, substantially circumferential or mixed, i.e., a combination of circumferential and radial flow.

Figure 6 shows an optional guiding portion 261 that is arranged at the cage 250 according to some embodiments. The guiding portion 261 is arranged next to the aperture 252 e.g., downstream of the aperture 252. The guiding portion 261 is arranged to influence the lubricant flow 301. For example, the guiding portion 261 is arranged to influence a direction of the lubricant flow 301 and/or momentum of the lubricant flow 301. For example, the guiding portion 261 guides the lubricant flow 301 towards a center of the raceway 210, 220. For example, the guiding portion 261 comprises a ramp-like or a vane-like shape to enhance the flow of the lubricant 300 to desired areas of the bearing 200.

The aperture 252 according to the different embodiments enables the desired lubricant flow 301 through a bearing volume 205. The bearing volume 205 is provided between the inner bearing ring 201 and the outer bearing ring 202. For example, the bearing volume 205 is provided by the raceway 201 or the two raceways 210, 220.

The aperture 252 enables the desired lubricant flow 301 between the raceway inner part 211 and the raceway outer part 212. This distributes the lubricant 300 along the raceway 210 and avoids undesirable pressure differences in the lubricant 300 along the raceway 210.

The aperture 252 enables the desired lubricant flow 301 between the first raceway 210 and the second raceway 220. This distributes the lubricant 300 between the two raceways 210, 220 and avoids undesirable pressure differences in the lubricant 300 along the two raceways 210, 220.

The aperture 252 results in good lubrication of the bearing 200 and thus, for example, increases the operating life of the bearing 200 and/or extends maintenance cycles.

### References

100 wind turbine
102 tower
104 foundation
106 nacelle
108 rotor
110 rotor blade
112 rotor hub
200 bearing
201 inner bearing ring
202 outer bearing ring
203 rolling element
203' rolling element
203" rolling element
204 axis
205 bearing volume
206 cross-sectional dimension of the rolling element
207, 208 lubricant line
210 raceway
211 raceway inner part
212 raceway outer part
220 raceway
231 higher velocity
232 lower velocity
250 cage
251 opening
252 aperture
253 first direction
254 first region
255 second region
256 edge portion
257 crest
258 trough
259 circumferential extent of the crest
260 circumferential extent of the trough
261 guiding portion
300 lubricant
301 lubricant flow

## Claims

1. A bearing (200) for a wind turbine (100), the bearing (200) comprising:
- an inner bearing ring (201),
- an outer bearing ring (202),
wherein the inner bearing ring (201) and the outer bearing ring (202) are arranged concentrically to each other and are configured for a relative rotation therebetween about an axis (204),
- a plurality of rolling elements (203) arranged in a raceway (210) defined in each of the inner bearing ring (201) and the outer bearing ring (202), each of the rolling elements (203) having a rolling contact in between the inner bearing ring (201) and the outer bearing ring (202),
- a cage (250) annularly arranged between the inner bearing ring (201) and the outer bearing ring (202) and is configured for holding the rolling elements (203), the cage (250) comprising a plurality of openings (251), each opening (251) configured to support one rolling element (203) of the plurality of rolling elements (203), and
- an aperture (252) for distribution of a lubricant (300) through a bearing volume (205), in particular through the raceway (210).

2. The bearing according to claim 1, wherein the cage (250) comprises at least one of a planar portion and a curvilinear portion extending at least partly across the raceway (210) relative to a first direction (253), and configured to be arranged at a first region (254) and a second region (255) across the raceway (210), in particular in an overspan manner across the raceway (210).

3. The bearing according to claim 2, wherein the aperture (252) comprises a gap (252a) formed by at least one of the first region (254) and the second region (255) with the cage (250) relative to the first direction (253).

4. The bearing according to claim 2, wherein the aperture (252) comprises a recess (252c, 252d, 252e) provided in the cage (250), the recess (252c, 252d, 252e) configured to be at least partly bound by at least one of the first region (254) and the second region (255).

5. The bearing according to any one of the preceding claims, wherein the cage (250) comprises at least one edge portion (256) defined with a plurality of crests (257) and troughs (258), wherein one trough (258) of the plurality of troughs (258) is configured to define the aperture (252).

6. The bearing according to claim 5, wherein:
- one crest (257) of the plurality of crests (257) has a circumferential extent (259) equal to or greater than a cross-sectional dimension (206) of one rolling element (203), in particular a radius of the rolling element (203), and/or
- one trough (258) of the plurality of troughs (258) has a circumferential extent (260) lesser than or equal to a cross-sectional dimension (206) of one rolling element (203), in particular a radius of the rolling element (203).

7. The bearing according to any one of the preceding claims, wherein the aperture (252) is formed between two directly adjacent openings (251) of the plurality of openings (251) along a circumference of the cage (250).

8. The bearing according to any one of the preceding claims, wherein a plurality of apertures (251) is formed in a non-repeating manner along a circumference of the cage (250).

9. The bearing according to any one of the preceding claims , wherein the aperture (252) comprises a guiding portion (261) configured for channeling a flow of the lubricant (300) through the bearing volume (205), in particular towards the raceway (210).

10. The bearing according to any one of the preceding claims, comprising a plurality of apertures (252), wherein the apertures (252) of the plurality of apertures (252) have two or more different shapes.

11. The bearing according to any one of the preceding claims, wherein the aperture (252) comprises at least one of a triangular shape, a rectangular shape, a trapezoidal shape, a polygonal shape, a round shape, an oval shape, and combinations thereof.

12. The bearing according to any one of the preceding claims, wherein:
- the cage (250) comprises a first cage segment and a second cage segment, and
- one aperture (252) in the first cage segment comprises a shape and/or a dimension being different than a shape and/or a dimension of another aperture (252) of the first cage segment and/or the second cage segment.

13. The bearing according to any one of the preceding claims, wherein the aperture (252) extends at least by 0.5 mm along the first direction (253).

14. The bearing according to any one of the preceding claims, wherein the bearing (200) is a pitch bearing and/or a yaw bearing.

15. A wind turbine (100), comprising:
- a bearing (200) according to any of the preceding claims,
- a first wind turbine component (110), and
- a second wind turbine component (112),
wherein the bearing (200) connects the first wind turbine component (110) and the second wind turbine component (112) for a relative rotation between the first wind turbine component (110) and the second wind turbine component (112).
